Europäisches Patentamt

European Patent Office

Office européen des brevets

(11) Veröffentlichungsnummer: **0 183 914**
**A2**

(12) ## EUROPÄISCHE PATENTANMELDUNG

(21) Anmeldenummer: 85109714.7

(22) Anmeldetag: 02.08.85

(51) Int. Cl.⁴: **B 32 B 3/04**

(30) Priorität: 13.11.84 DE 3441378

(43) Veröffentlichungstag der Anmeldung:
11.06.86 Patentblatt 86/24

(84) Benannte Vertragsstaaten:
AT BE CH DE FR GB IT LI LU NL SE

(71) Anmelder: Duropal-Werk Eberh. Wrede GmbH & Co. KG
Industriegelände Bruchhausen
D-5760 Arnsberg 1(DE)

(72) Erfinder:
Der Erfinder hat auf seine Nennung verzichtet

(74) Vertreter: von Rohr, Hans Wilhelm, Dipl.-Phys. et al,
Patentanwälte Gesthuysen & von Rohr Huyssenallee 15
Postfach 10 13 33
D-4300 Essen 1(DE)

(54) **Verbundplatte und Verfahren zu deren Herstellung.**

(57) Bei einer Verbundplatte mit einer Kernplatte (1), einer auf die Oberseite (2) der Kernplatte (1) aufgeleimten Deckplatte (3), vorzugsweise einer Hochdruck-Schnichtstoffplatte, einem auf den Rand der Kernplatte (1) aufgeleimten, vorzugsweise von der um die Oberkante der Kernplatte (1) herumgebogenen Deckplatte (3) gebildeten Randstreifen (4) und einer auf die Unterseite (5) der Kernplatte (1) aufgeleimten Schutzfolie (6), sind an der Unterkante der Verbundplatte auftretende Probleme bezüglich eines Feuchtigkeitseintrittes an dort vorhandenen Leimfugen und bezüglich des Wasserabtropfens dadurch gelöst, daß auf der Unterseite (5) der Kernplatte (1) eine zum Rand der Kernplatte (1) parallele, von der Unterkante ausgehende, stufenartige Ausnehmung (7) ausgebildet und in diese Ausnehmung (7) ein Kantenstreifen (8) im wesentlichen paßgenau eingesetz ist und daß der Randstreifen (4) und die Schutzfolie (6) am Rande mit dem Kantenstreifen (8) verleimt sind. Zweckmäßigerweise ist am Kantenstreifen (8) eine Abtropfkante (9) ausgebildet. Dazu weist vorteilhafterweise der Kantenstreifen (8) eine von der Unterseite (5) ausgehende Nut (10) auf, in die eine nach unten herausragende, die Abtropfkante (9) bildende Abtropfleiste (11) vorzugsweise im Preßsitz einsetzbar ist.

Fig.1

EP 0 183 914 A2

Die Erfindung betrifft eine Verbundplatte mit einer Kernplatte, einer
auf die Oberseite der Kernplatte aufgeleimten Deckplatte, vorzugsweise
einer Hochdruck-Schichtstoffplatte (HPL-Platte, DIN 16926), einem auf
den Rand der Kernplatte aufgeleimten, vorzugsweise von der um die
Oberkante der Kernplatte herumgebogenen Deckplatte gebildeten Randstreifen und ggf. einer auf die Unterseite der Kernplatte aufgeleimten
Schutzfolie od. dgl., wobei auf der Unterseite in dem der Unterkante
der Kernplatte benachbarten Bereich ggf. eine Abtropfkante od. dgl.
vorgesehen ist. Gegenstand der Erfindung ist auch ein Verfahren zur
Herstellung derartiger Verbundplatten.

Verbundplatten und Verfahren zur Herstellung von Verbundplatten sind
seit langem bekannt (vgl. die DE-OS 31 31 820). Bei der bei einer Verbundplatte generell vorgesehenen Kernplatte handelt es sich zumeist um
eine Spanplatte. Grundsätzlich sind als Kernplatten aber auch Naturholzplatten oder Platten aus anderen Materialien, beispielsweise Kunststoff,
geeignet. Auf die Oberseite einer solchen Kernplatte wird regelmäßig eine
Deckplatte aufgeleimt, bei der es sich üblicherweise um eine Hochdruck-
Schichtstoffplatte (HPL-Platte, DIN 16926) handelt. Gleichwohl sind auch
andere Deckplatten, beispielsweise aus duroplastischem oder thermoplastischem Kunststoff, aus Furnierholz oder aus Metall für unterschiedliche
Anwendungsfälle bekannt. Eine auf die Unterseite der Kernplatte aufgeleimte Schutzfolie od. dgl., beispielsweise auch eine Deckplatte im
zuvor erläuterten Sinne, dient dem Schutz der Kernplatte der Verbundplatte
gegen Feuchtigkeit und Hitzeeinwirkungen.

Bei Verbundplatten der in Rede stehenden Art finden seit längerer Zeit
abgerundete Ränder bzw. Oberkanten Interesse. Bei manchen Verbundplatten,
insbesondere bei Verbundplatten, die als Arbeitsplatte für Küchen, Bäder
und Labors sowie als Abdeckplatten und Fensterbänke Verwendung finden,
kommt einer Abrundung der Oberkante der Kernplatte und einem Herumziehen
der Deckplatte bis auf den Rand der Kernplatte die zusätzliche Bedeutung

- 1 -

zu, daß an der Oberkante der Verbundplatte das Auftreten einer störenden Leimfuge vermieden wird. Das ist nicht nur aus optischen Gründen zweckmäßig, sondern insbesondere beim Hantieren mit Wasser vorteilhaft, da Leimfugen immer Problembereiche für das Eintreten von Wasser oder Feuchtigkeit sind.

Am Rand einer Verbundplatte der zuvor erläuterten Art herablaufendes Wasser tropft nicht selbstverständlich an der Unterkante der Verbundplatte ab. Aufgrund der Adhäsionswirkung des Wassers haben Wassertropfen die Tendenz, von der Unterkante der Verbundplatte auf der Unterseite nach innen zu laufen. Diese Tendenz ist besonders ausgeprägt bei durch Verwendung von Spülmittel entspanntem Wasser, da dessen Adhäsionswirkung ganz außerordentlich groß ist. Diese Tendenz ist in der Anwendung für Verbundplatten der in Rede stehenden Art außerordentlich unangenehm. Die an der Unterkante der Verbundplatte vorhandene Leimfuge, an der die Deckplatte bzw. der Randstreifen einerseits und die Schutzfolie andererseits zusammenstoßen, ist für den Eintritt von Feuchtigkeit besonders anfällig und somit hier besonders gefährdet. Außerdem führen auf der Unterseite der Verbundplatte nach innen laufende Wassertropfen zu Wasseransammlungen in Küchenmöbeln und zum Quellen ungeschützter Holzteile. Besonders unangenehm ist der zuvor erläuterte Effekt natürlich dann, wenn die Unterseite der Kernplatte nicht durch eine wasserfeste Schutzfolie abgedeckt ist.

Im Stand der Technik ist versucht worden, ein Abtropfen von Wassertropfen an der Unterkante der Verbundplatte durch Vorsehen einer parallel zum Rand der Kernplatte verlaufenden Abtropfkante oder Abtropfnut zu erzwingen. Auch ist versucht worden, die Deckplatte ein bestimmtes Stück auf der Unterseite der Kernplatte nach innen zu ziehen und damit die Leimfuge nach innen zu verlegen. Die bisherigen Ansätze in dieser Richtung haben jedoch nicht zu in der Praxis befriedigenden Ergebnissen geführt.

- 2 -

Ausgehend von dem zuvor erläuterten Stand der Technik liegt der Erfindung nun die Aufgabe zugrunde, die bekannte Verbundplatte so auszugestalten und weiterzubilden, daß die bekannten, an der Unterseite, insbesondere an der Unterkante, der Verbundplatte - Unterkante der Kernplatte - auftretenden Probleme, insbesondere die Probleme des Wassereintritts, beseitigt sind. Aufgabe der Erfindung ist auch die Angabe eines Verfahrens zur Herstellung einer solchen Verbundplatte unter besonderer Berücksichtigung von Fertigungs-, Transport- und Anwendungsgesichtspunkten.

Die erfindungsgemäße Verbundplatte, bei der die zuvor aufgezeigte Aufgabe gelöst ist, ist durch die Merkmale des Patentanspruchs 1 gekennzeichnet. Erfindungsgemäß ist erkannt worden, daß das Material üblicher Kernplatten, nämlich Spanplatten, nicht nur sehr feuchtigkeitsempfindlich ist, sondern auch einen nicht ganz optimalen Untergrund zum Verleimen der Deckplatte bzw. der Schutzfolie bietet. Davon ausgehend wird das Material der Kernplatte in einem kleinen Bereich nahe bzw. an der Unterkante durch den erfindungsgemäß vorgesehenen Kantenstreifen ersetzt. Dieser Kantenstreifen als solcher kann relativ großflächig in die Ausnehmung in der Kernplatte eingesetzt bzw. eingeleimt werden. Für den Kantenstreifen kann ein Material gewählt werden, daß einerseits völlig feuchtigkeitsunempfindlich ist. mit dem andererseits die Deckplatte und die Schutzfolie, falls vorhanden, optimal verleimt werden können. Die Materialien der Deckplatte und ggf. der Schutzfolie sowie des Kantenstreifens können also so aufeinander abgestimmt sein, daß sich nun im Bereich der Unterkante eine absolut feuchtigkeitsdichte Leimfuge ergibt. Ein Ablösen der Deckplatte bzw. der Schutzfolie vom Kantenstreifen ist hier praktisch nicht mehr möglich. Somit ist die erfindungsgemäße Verbundplatte auch besonders verschleißfest. Schließlich bietet der in die Kernplatte eingesetzte Kantenstreifen die Möglichkeit, dann, wenn dies aus anwendungstechnischen Gründen gewünscht ist, besonders zweckmäßig eine Abtropfkante vorzusehen, was weiter unten noch näher erläutert werden wird.

- 3 -

Für die Auswahl des Materials des Kantenstreifens sind die voranstehenden Überlegungen natürlich von erheblicher Bedeutung. Im übrigen kann aber das Material des Kantenstreifens weitgehend frei ausgewählt werden. Der Kantenstreifen kann also beispielsweise aus Metall, Holz, Hartholz usw. bestehen. Besonders vorteilhaft ist es aber, wenn der Kantenstreifen entsprechend den Merkmalen des Patentanspruchs 2 ausgebildet ist. Generell gilt natürlich, daß identische Materialien sich besonders gut miteinander verleimen lassen, da das entsprechende Klebemittel optimal abgestimmt werden kann. Besonders gilt dies für das Material der Hochdruck-Schichtstoffplatten, für das hervorragend geeignete, wasserdichte und sehr klebestarke Klebemittel existieren. Generell kann der Kantenstreifen einstückig oder mehrschichtig aufgebaut sein. Letzteres empfiehlt sich insbesondere dann, wenn der Kantenstreifen aus dem Material der Deckplatte besteht. Dann können einfach mehrere entsprechend breite Streifen des Materials der Deckplatte zu einem Kantenstreifen miteinander verleimt werden. Der mehrschichtige Aufbau des Kantenstreifens hat überdies den Vorteil, daß die Dicke des Kantenstreifens bedarfsweise verändert werden kann.

Zur Ausbildung der Abtropfkante am Kantenstreifen zeigt Patentanspruch 3 verschiedene Möglichkeiten. Im ersten Fall weist der Kantenstreifen eine gegenüber der Unterkante der Verbundplatte zurückgesetzte, nach unten ragende Stufe auf, an der nach innen laufende Wassertropfen abtropfen können. Eine solche Abtropfkante kann auch durch eine Nut gebildet sein. Für die Abtropfwirkung der Abtropfkante sind die Stufenhöhe bzw. die Nuttiefe und Nutbreite von entscheindender Bedeutung. Insbesondere bei entspanntem Wasser hat sich gezeigt, daß selbst eine mehrere Millimeter breite und 2 mm tiefe Nut kein wirklich sicheres Hindernis für nach innen laufende Wassertropfen bzw. einen nach innen kriechenden Wasserfilm bildet. Nun kann man aber auch beispielsweise die Tiefe der Nut im Kantenstreifen nicht beliebig vergrößern, da der Kantenstreifen nicht allzu dick sein kann. Dies läßt sich umgehen, indem der Kantenstreifen mit einer

- 4 -

nach unten abragenden, die Abtropfkante bildenden Abtropfleitste versehen wird. Weist der Kantenstreifen eine von der Unterseite ausgehende Nut. auf, so läßt sich diese Lehre nach Patentanspruch 4 in besonders zweckmäßiger Weise dadurch verwirklichen, daß in die Nut eine aus der Nut nach unten herausragende, die Abtropfkante bildende Abtropfleiste einsetzbar, vorzugsweise im Preßsitz einsetzbar ist. Diese Lehre der Erfindung beruht auf der Erkenntnis, daß eine separate Abtropfleiste materialmäßig so gestaltet werden kann, daß ein Abtropfen von Wasser an dieser Abtropfleiste praktisch völlig sichergestellt ist. Die Abtropfleiste kann überdies mehr oder weniger beliebig weit nach unten aus der Nut herausragen bzw. nach unten von dem Kantenstreifen abragen.

Wenn es im zuvor erläuterten Anspruch heißt, daß die Abtropfleiste in die Nut im Kantenstreifen einsetzbar ist, so bedeutet dies, daß die Abtropfleiste nicht notwendigerweise schon bei der Herstellung der Verbundplatte in die Nut eingesetzt wird. Die Abtropfleiste kann vielmehr ohne weiteres auch erst später in die Nut eingesetzt werden, beispielsweise durch einen die Verbundplatte verarbeitenden Handwerker. Das hat den Vorteil, daß die Verbundplatte ebenso leicht und platzsparend gestapelt werden kann wie die bislang bekannten Verbundplatten, was sonst bei einer nach unten abragenden Abtropfleiste nicht möglich wäre. Die separate und später erst eingesetzte Abtropfleiste ist also für Produktion und Transport der Verbundplatte von besonderem Vorteil. Anwendungstechnisch empfiehlt sich die besonders hervorgehobene Einsetzbarkeit der Abtropfleiste in die Nut im Preßsitz. Dann kann nämlich die Abtropfleiste einfach in die Nut eingeschlagen werden. Gleichwohl ist es natürlich prinzipiell ohne weiteres möglich, die Abtropfleiste in die Nut einzukleben oder anderweitig in der Nut zu befestigen. Insgesamt kommt dieser Lehre eine besondere Bedeutung zu, und zwar unabhängig davon, ob der Randstreifen und/oder die Schutzfolie mit dem Kantenstreifen selbst verleimt oder nur auf Stoß mit dem Kantenstreifen mit der Kernplatte verleimt sind.

- 5 -

Patentanspruch 5 gibt bevorzugte Maße für den Kantenstreifen bei Einsatz für übliche Verbundplatten an.

Für die Abtropfleiste kommen grundsätzlich eine Vielzahl von Materialien in Betracht. Beispielsweise kann die Abtropfleiste aus einem Hart-PVC bestehen. Hinsichtlich der Abtropfwirkung der Abtropfleiste bevorzugte Materialien bzw. Maße nennt Patentanspruch 6. Metall als Material der Abtropfleiste erlaubt auch ein einfaches Einschlagen der Abtropfleiste in die Nut im zuvor erläuterten Sinne.

Ein besonders zweckmäßiges Verfahren zur Herstellung einer Verbundplatte der zuvor erläuterten Art ist in Patentanspruch 7 erläutert. Patentanspruch 8 gibt eine herstellungstechnisch bevorzugte Version dieses Verfahrens an. In einem Arbeitsgang bedeutet dabei natürlich nicht notwendig genau gleichzeitiges Bearbeiten.

Soll bei der erfindungsgemäßen Verbundplatte eine Ausnehmung und/oder, insbesondere, eine Nut im Kantenstreifen vorgesehen sein, so kann nach Patentanspruch 9 der Kantenstreifen von vornherein mit der stufenartigen Ausnehmung und/oder Nut versehen, was herstellungstechnisch ohne weiteres zu verwirklichen ist, oder es erfolgt erst nach dem Aufleimen der Deckplatte und ggf. der Schutzfolie od. dgl. das Einbringen der stufenartigen Ausnehmung und/oder der Nut. Das Einbringen der Nut ist dann herstellungstechnisch, was die Verbundplatte betrifft, der letzte Arbeitsgang. Erst später, am Einsatzort, kann beispielsweise durch einen Handwerker dann das Einschlagen einer evtl. vorhandenen Abtropfleiste erfolgen. Das hat die weiter oben schon erläuterten produktionstechnischen, transporttechnischen und anwendungstechnischen Vorteile und ist eine für sich eigenständige Lehre der Erfindung.

Im folgenden wird die Erfindung anhand einer lediglich Ausführungsbeispiele darstellenden Zeichnung näher erläutert; es zeigt

- 6 -

Fig. 1    ein Ausführungsbeispiel einer Verbundplatte in perspektivischer Seitenansicht,

Fig. 2    ausschnittweise, im Schnitt den Randbereich eines ersten Ausführungsbeispiels einer Verbundplatte und

Fig. 3    in Fig. 2 entsprechender Darstellung den Randbereich eines zweiten Ausführungsbeispiels einer Verbundplatte.

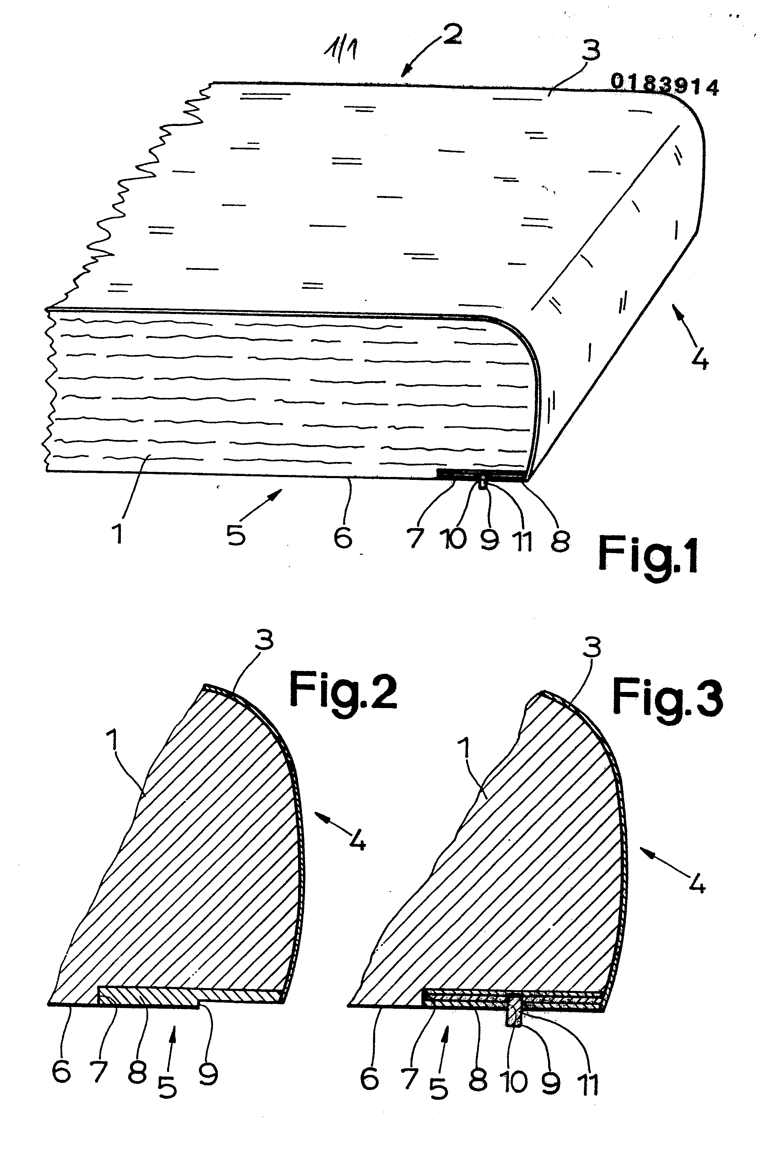

Die in Fig. 1 grundsätzlich dargestellte Verbundplatte weist eine Kernplatte 1, eine auf die Oberseite 2 der Kernplatte 1 aufgeleimte Deckplatte 3, einen auf den Rand der Kernplatte 1 aufgeleimten Randstreifen 4 und eine auf die Unterseite 5 der Kernplatte 1 aufgeleimte Schutzfolie 6 auf. In den dargestellten Ausführungsbeispielen sind, ohne daß dies einschränkend zu verstehen ist, die Kernplatte 1 als Holzspanplatte und die Deckplatte 3 als Schichtstoffplatte (Hochdruck-Schichtstoffplatte - HPL-Platte nach DIN 16926) ausgeführt. Der Randstreifen 4 wird im dargestellten Ausführungsbeispiel von der um die abgerundete Oberkante der Kernplatte 1 herumgebogenen Deckplatte 3 gebildet. Die Abmessungen der in den Ausführungsbeispielen dargestellten Verbundplatten können im üblichen Rahmen liegen. Für die Deckplatte ist in den dargestellten Ausführungsbeispielen eine Dicke von ca. 0,8 mm vorgesehen. Auch dies aber ist nicht einschränkend zu verstehen.

Aus der Prinzipdarstellung in Fig. 1 ergibt sich, daß bei der Verbundplatte auf der Unterseite 5 der Kernplatte 1 eine parallel zum Rand der Kernplatte 1 verlaufende, hier und vorzugsweise von der Unterkante ausgehende, stufenartige Ausnehmung 7 ausgebildet ist. In diese Ausnehmung 7 der Kernplatte 1 ist ein Kantenstreifen 8 im wesentlichen paßgenau eingesetzt, nämlich eingeleimt. Der Randstreifen 4 und die Schutzfolie 6 sind am Rande mit dem Kantenstreifen 8 verleimt. Durch den Kantenstreifen 8

- 7 -

ist im dargestellten Ausführungsbeispiel einer erfindungsgemäßen Verbundplatte auf der Unterseite 5 in dem der Unterkante der Kernplatte 1 benachbarten Bereich eine Abtropfkante 9 gebildet. Das wird später noch genauer erläutert.

Die in Fig. 2 dargestellte Verbundplatte weist einen Kantenstreifen 8 aus Kunststoff, nämlich einem thermoplastischem Kunststoff, auf. Die Abtropfkante 9 ist an diesem Kantenstreifen 8 selbst ausgebildet. Dazu weist der Kantenstreifen 8 eine von der Unterkante der Verbundplatte ausgehende, stufenartige Ausnehmung auf. Deutlich erkennbar ist, daß die Deckplatte 3 am Rand optimal mit dem Kantenstreifen 8 verleimt ist und daß die Schutzfolie 6 außerhalb des Bereiches der Ausnehmung ebenfalls mit dem Kantenstreifen 8 verleimt ist. Am Randstreifen 4 der Verbundplatte herablaufende Wassertropfen oder herabkriechende Wasserfilme können zwar an der Unterkante der Verbundplatte nach innenlaufen bzw. kriechen, werden aber zumeist an der Abtropfkante 9 dann abtropfen. Ein Eintritt von Feuchtigkeit in die zuvor erläuterten Leimfugen ist ausgeschlossen, da die Verbindung der Deckplatte 3 bzw. des Randstreifens 4 und der Schutzfolie 6 einerseits mit dem Kantenstreifen 8, andererseits aufgrund der Materialauswahl völlig wasserdicht herstellbar sind.

Bei dem in Fig. 3 dargestellten, bevorzugten Ausführungsbeispiel einer Verbundplatte besteht der Kantenstreifen 8 aus dem Material der Deckplatte 3 und ist mehrschichtig aufgebaut. Genau gesagt besteht der Kantenstreifen 8 hier aus drei miteinander verleimten streifenartigen Abschnitten des Materials der Deckplatte 3. Bei einer Schichtdicke der Deckplatte 3 von 0,8 mm hat hier der Kantenstreifen 8 insgesamt eine Dicke von ca. 2,4 mm. Die Tiefe des Kantenstreifens beträgt in beiden Ausführungsbeispielen ca. 22 mm. In beiden Ausführungsbeispielen ist die vorgesehene Abtropfkante 9 etwa mittig angeordnet und damit von der unteren Vorderkante der Verbundplatte zurückgesetzt.

- 8 -

In dem in Fig. 3 dargestellten Ausführungsbeispiel liegt eine Besonderheit darin, daß der Kantenstreifen 8 eine von der Unterseite 5 ausgehende Nut 10 aufweist. In die Nut 10 ist eine aus der Nut 10 nach unten herausragende, die Abtropfkante 9 bildende Abtropfleiste 11 eingesetzt, und zwar im dargestellten Ausführungsbeispiel im Preßsitz eingesetzt. Deutlich erkennbar ist, daß der Kantenstreifen 8 hier am Boden der Nut 10 eine restliche Dicke von ca. 0,5 mm aufweist. Die Nut 10 sollte möglichst nicht bis in die Kernplatte 1 reichen, damit nicht über die Nut 10 Feuchtigkeit in die Kernplatte 1 gelangen und das Material der Kernplatte 1 zum Quellen bringen kann. Die Abtropfleiste 11 ragt von der Unterseite 5 etwa 2,5 mm nach unten ab und besteht aus Metall, im dargestellten Ausführungsbeispiel aus Aluminium.

Während beim Ausführungsbeispiel nach Fig. 2 für die Stapelbarkeit der dargestellten Verbundplatte keine Probleme auftreten, stellt die beim Ausführungsbeispiel nach Fig. 3 nach unten abragende Abtropfleiste 11 für die Stapelbarkeit der Verbundplatte ein erhebliches Problem dar. Diese Abtropfleiste 11 wird daher zweckmäßigerweise nicht schon werksseitig in die Nut 10 eingesetzt, sondern begleitet die Verbundplatte als separates Teil bis zum Einsatzort. Dort kann sie dann von einem Handwerker in die Nut 10 eingeschlagen werden. Dies hat überdies den Vorteil, daß nach den am Einsatzort gegebenen räumlichen Voraussetzungen und nach den Wünschen des Benutzers die Abtropfleiste 11 ggf. auch weggelassen werden kann. Selbst ohne Abtropfleiste 11 bietet die Verbundplatte nach Fig. 3 mit der Nut 10 noch einen ziemlich guten Schutz dagegen, daß Wasser auf der Unterseite 5 der Verbundplatte nach innen fließt oder kriecht.

Der separat in die Nut 10 einsetzbaren Abtropfleiste 11 kommt besondere und eigenständige Bedeutung zu, nämlich unabhängig davon, ob der Randstreifen 4 und/oder die Schutzfolie 6 mit dem Kantenstreifen 8 selbst verleimt sind oder nur auf Stoß mit dem Kantenstreifen 8 stehend mit der Kernplatte 1 verleimt sind. Der wesentliche handhabungstechnische Vorteil

- 9 -

der separat einsetzbaren Abtropfleiste wird nämlich auch dann erzielt. Im übrigen muß der Kantenstreifen 8 nicht notwendig bis zur unteren Vorderkante der Verbundplatte reichen, auch bei einem zurückgesetzt von der unteren Vorderkante der Verbundplatte angeordneten Kantenstreifen, der in Strenge kein Kantenstreifen, sondern nun ein Einlegestreifen ist, sind die Lehren der Erfindung im großen und ganzen vorteilhaft anwendbar.

Insgesamt sind mit der Verbundplatte all die Probleme gelöst, die bei den früher bekannten Verbundplatten an der Unterseite, insbesondere der Unterkante, in Verbindung mit Feuchtigkeitseintritt und Abtropfen von Wasser vorlagen.

Patentansprüche:

1. Verbundplatte mit einer Kernplatte, einer auf die Oberseite der Kernplatte aufgeleimten Deckplatte, vorzugsweise einer Hochdruck-Schichtstoffplatte (HPL-Platte, DIN 16926), einem auf den Rand der Kernplatte aufgeleimten, vorzugsweise von der um die Oberkante der Kernplatte herumgebogenen Deckplatte gebildeten Randstreifen und ggf. einer auf die Unterseite der Kernplatte aufgeleimten Schutzfolie od. dgl., wobei auf der Unterseite in dem der Unterkante der Kernplatte benachbarten Bereich ggf. eine Abtropfkante od. dgl. vorgesehen ist, d a d u r c h   g e k e n n z e i c h - n e t, daß auf der Unterseite (5) der Kernplatte (1) eine parallel zum Rand der Kernplatte (1) verlaufende, vorzugsweise von der Unterkante ausgehende, vorzugsweise stufenartige Ausnehmung (7) ausgebildet und in diese Ausnehmung (7) ein Kantenstreifen (8) im wesentlichen paßgenau eingesetzt, vorzugsweise eingeleimt ist und daß der Randstreifen (4) und, falls vorhanden, die Schutzfolie (6) od. dgl. am Rande mit dem Kantenstreifen (8) verleimt ist bzw. sind.

2. Verbundplatte nach Anspruch 1, dadurch gekennzeichnet, daß der Kantenstreifen (8) aus Kunststoff, insbesondere aus einem thermoplastischen Kunststoff, und/oder aus dem Material der Deckplatte (3), insbesondere also aus dem Material einer Hochdruck-Schichtstoffplatte (HPL-Platte, DIN 16926), besteht und/oder mehrschichtig aufgebaut ist.

3. Verbundplatte nach Anspruch 1 oder 2, dadurch gekennzeichnet, daß die Abtropfkante (9) am Kantenstreifen (8) ausgebildet ist und, vorzugsweise, daß der Kantenstreifen (8) zur Bildung der Abtropfkante (9) eine vorzugsweise von der Unterkante ausgehende, stufenartige Ausnehmung, eine parallel zum Rand der Kernplatte (1) verlaufende, von der Unterseite (5) ausgehende Nut (10) und/oder eine nach unten abragende, die Abtropfkante (9) bildende Abtropfleiste aufweist.

- 1 -

4. Verbundplatte nach Anspruch 3, dadurch gekennzeichnet, daß in die Nut (10) eine aus der Nut (10) nach unten herausragende, die Abtropfkante (9) bildende Abtropfleiste (11) einsetzbar, vorzugsweise im Preßsitz einsetzbar ist.

5. Verbundplatte nach einem der Ansprüche 1 bis 4, dadurch gekennzeichnet, daß der Kantenstreifen (8) eine Tiefe von 12 bis 32 mm, vorzugsweise von 20 bis 24 mm, insbesondere von ca. 22 mm und/oder eine Dicke von 1 bis 4 mm, vorzugsweise von ca. 2,4 mm, und/oder am Boden der Nut (10) eine Dicke von 0,1 bis 1,0 mm, vorzugsweise von ca. 0,5 mm aufweist und, vorzugsweise, daß die Abtropfkante (9) etwa mittig im Kantenstreifen (8) angeordnet ist.

6. Verbundplatte nach Anspruch 3 oder 4, dadurch gekennzeichnet, daß die Abtropfleiste (11) aus einem Metall, vorzugsweise aus Aluminium oder Edelstahl, besteht und/oder von der Unterseite (5) um 2 bis 3 mm, vorzugsweise etwa 2,5 mm nach unten abragt,

7. Verfahren zur Herstellung einer Verbundplatte nach einem der vorhergehenden Ansprüche, dadurch gekennzeichnet, daß die Ausnehmung, vorzugsweise von der Unterkante der Kernplatte ausgehend, auf der Unterseite der Kernplatte eingebracht und in die Ausnehmung der Kantenstreifen eingesetzt, vorzugsweise eingeleimt, wird und daß dann die Deckplatte auf die Oberseite der Kernplatte, der vorzugsweise von der Deckplatte gebildete Randstreifen auf den Rand der Kernplatte und den Rand des Kantenstreifens und, falls vorhanden, die Schutzfolie od. dgl. auf die Unterseite der Kernplatte und des Kantenstreifens aufgeleimt werden.

8. Verfahren nach Anspruch 7, wobei ggf. die Oberkante der Kernplatte abgerundet wird, dadurch gekennzeichnet, daß die Tiefe der Ausnehmung einerseits und die Tiefe des Kantenstreifens andererseits so bemessen

- 2 -

sind, daß der Kantenstreifen nach dem Einsetzen in die Ausnehmung über den Rand der Kernplatte vorspringt und daß dann der Kantenstreifen an die Kontur des Randes der Kernplatte, vorzugsweise durch Beifräsen, angepaßt wird und daß ggf. das Anpassen des Kantenstreifens an die Kontur des Randes in einem Arbeitsgang mit dem Abrunden der Oberkante der Kernplatte erfolgt.

9. Verfahren nach Anspruch 7 oder 9, dadurch gekennzeichnet, daß der Kantenstreifen von vornherein mit der stufenartigen Ausnehmung und/oder der Nut versehen ist oder daß das Einbringen der stufenartigen Ausnehmung und/oder der Nut in den Kantenstreifen nach dem Aufleimen der Deckplatte und ggf. der Schutzfolie od. dgl. auf den Kantenstreifen erfolgt.

1/1  2  3  0183914

Fig.1

1  5  6  7 10 9 11 8

3

**Fig.2**

1

4

6 7 8 5 9

3

**Fig.3**

1

4

6 7 5 8 10 9 11